# FASCICULE DE BREVET EUROPEEN

(11) **EP 2 493 714 B1**
(45) Date de publication et mention de la délivrance du brevet: **22.07.2015**
(21) Numéro de dépôt: 10776941.6
(22) Date de dépôt: 26.10.2010
(51) Int. Cl.: B60J 7/08, B60J 7/06

(54) **DISPOSITIF DE DEROULEMENT ET D'ENROULEMENT AUTOMATIQUE D'UNE BACHE**
VORRICHTUNG ZUR AUTOMATISCHEN AB- UND AUFWICKLUNG EINER SEGELTUCHPLANE
DEVICE FOR AUTOMATICALLY UNWINDING AND WINDING UP A TARPAULIN

(30) Priorité: 26.10.2009 FR 0905131
(43) Date de publication de la demande: 05.09.2012
(73) Titulaire: Cramaro France Sàrl, 91150 Morigny-Champigny (FR)
(72) Inventeur: MARTELLIERE, Vincent, F-62136 Richebourg (FR)
(74) Mandataire: Parzy, Benjamin Alain
(86) Numéro de dépôt international: PCT/EP2010/006530
(87) Numéro de publication internationale: WO 2011/050939

(56) Documents cités:
- WO-A1-84/03667
- CA-A- 1 212 974
- US-A- 5 658 037
- US-B1- 6 199 935
- US-B1- 6 641 199
- US-B1- 7 188 887

## Description

L'invention concerne un dispositif de couverture automatisé d'un contenant par une bâche, et en particulier une benne.

Dans le cadre de la présente invention, le déroulement et l'enroulement d'une bâche concernent indifféremment tout contenant qui doit être découvert et recouvert par le dessus, par exemple pour des raisons d'étanchéité ou de protection contre des pollutions externes. Le contenu du contenant peut être de toutes sortes, aussi bien des gravats comme des produits alimentaires, agricoles ou toutes autres choses. Le contenant comprend de manière générale un fond et quatre bords ou rives délimitant un volume intérieur. Le chargement du contenant se fait par une ouverture, disposée sur le dessus du contenant et délimitée par les quatre rives.

Ce type de contenant, dont la benne est un exemple classique, est particulièrement adapté au transport de produits en vrac : matériaux, produits agricoles, déchets. Or, les produits en vrac forment dans le contenant des dômes dont le sommet dépasse fréquement l'ouverture, de sorte qu'une fermeture par une couverture plane est impossible.

Il faut entendre par dôme toute forme du contenu qui dépasse le contenant de manière importante, et constitue une ou des butes comportant des pentes pouvant atteindre 45°.

Il est connu du document US6641199 un dispositif de couverture d'un contenant ouvert, qui comporte une bâche qui est déroulée manuellement pour couvrir une ouverture. Toutefois, ce dispositif ne permet pas de déployer la bâche lorsque le contenu dépasse en hauteur le contenant de manière importante en formant un dôme élevé. Le contenu est donc mal protégé, voire pas du tout.

De plus, le déploiement de la bâche est réalisé manuellement, ce qui contraint l'opérateur à des efforts importants.

Egalement, le dispositif de déroulement de la bâche selon le document US6641199 est placé au dessus du contenant et à proximité de l'ouverture de chargement, ce qui occasionne une gêne pour le chargement ou le déchargement.

De manière générale, les dispositifs de couverture utilisant une bâche sont également fortement exposés lors du chargement et sont donc facilement détériorés.

Il est également connu du document US6199935 des systèmes mécaniques et motorisés permettant de recouvrir le contenant plus facilement. Mais ces systèmes mécaniques sont lourds et occupent un volume important, ce qui fait perdre de la capacité de charge propre et demande une attention particulière lors du chargement ou du déchargement, afin d'éviter de casser des composants du système mécanique comme les câbles, les poulies ou sangles de rappel, les crémaillères ou les moteurs.

De plus, pour faciliter le déploiement de la bâche, il est par ailleurs connu du document US6199935 de disposer sous la bâche des arceaux métalliques cintrés vers le haut pour que la bâche déroulée forme un léger dôme.

Les arceaux permettent en outre d'éviter la formation de poches synonyme d'une rétention d'eau en cas de pluie.

Ces arceaux peuvent gêner, et risquent d'être endommagés lors du chargement du contenant par des matériaux.

On connaît également des dispositifs de dé-ploiement pneumatique d'une bâche enroulée sur une surface, au moyen de chambres à air ou à fluide dont le gonflage progressif provoque le déroulement de la bâche sur la surface.

Les différents dispositifs de déroulement pneumatique connu comportent des chambres liées en différents points le long de la bâche, qui sont remplies d'air comprimé pour pousser sur le rouleau de bâche et le dérouler. Un problème qui se pose est que lors du gonflage des chambres sur un dôme, le rouleau de bâche peut se dérouler sur lui-même, sans parvenir à monter sur le dôme.

L'invention à pour objectif de proposer un dispositif pour couvrir un contenant en remédiant au moins en partie aux inconvénients des autres dispositifs.

L'invention propose à cet effet un dispositif pour couvrir un contenant selon la revendication 1.

L'utilisation de chambres de déploiement gonflables permet de facilement déployer la bâche tandis que les moyens de contrôle de la vitesse de rotation de la barre d'enroulement permettent à la bâche de franchir des dômes même sur des pentes élevées, sans risque de voir la bâche se déployer sur elle-même.

Les moyens de contrôle comportent un moteur d'entraînement en rotation de la barre d'enroulement.

Le moteur est porté par un bras oscillant articulé sur un axe de maintien monté coulissant dans un rail de guidage porté par le contenant, l'axe de maintien permettant un coulissement transversal du bras lors du déploiement de la bâche.

Le dispositif selon l'invention comporte en outre une ou plusieurs des caractéristiques suivantes. Le moteur est un moteur électrique qui comporte en outre un capteur de courant qui déclenche un arrêt du moteur à partir d'un certain seuil d'intensité du courant correspondant pour la bâche à la position déroulée.

Ainsi, un simple moteur électrique de faible puissance permet de contrôler la vitesse de rotation de la barre d'enroulement et garantit le bon déploiement de la bâche, même sur un dôme.

Le moteur est également utilisé pour enrouler la bâche et découvrir le contenant.

L'invention concerne également un ensemble comprenant un dispositif selon l'invention, et un contenant ouvert comprenant au moins un support de la bâche enroulée, disposé sur la première rive du contenant, chaque support étant agencé pour maintenir la bâche enroulée dans une position de stockage de sorte quelle laisse libre l'ouverture du contenant.

Le dispositif, très compact, permet de stocker le rouleau de bâche 4 sur le flanc du contenant, laissant l'ouverture libre et accessible pour le chargement et le déchargement. La bâche est ainsi protégée lors du chargement ou du déchargement autant du contenu que des engins de manutention.

Pour faciliter le déploiement de la bâche, l'ensemble peut comporter des moyens de levage pour déplacer le rouleau de bâche de la position de stockage dans une position horizontale de déploiement facilitant son déroulement.

Les descriptions de modes de réalisation de l'invention, données ci-après à titre d'exemple et de manière non limitative, sont faites en référence aux dessins annexés parmi lesquels :
- les figures 1 à 4 sont des vues schématiques en perspective d'un véhicule industriel comportant un contenant et un dispositif de couverture selon un premier mode de réalisation de l'invention, les figures illustrant quatre phases successives du déploiement de la bâche ;
- la figure 5 est une vue schématique de la rive avant du contenant et du dispositif de couverture selon un deuxième mode de réalisation de l'invention, le rouleau de bâche étant présenté dans plusieurs positions différentes de son déploiement ;
- la figure 6 est une vue en coupe d'une chambre de déploiement ;
- la figure 7 est une vue en coupe du contenant, de la bâche déployée et d'un arceau pneumatique, pendant le roulage du véhicule.
- La figure 8 est une vue en coupe partielle du contenant et des appuis de blocage de la bâche.
- les figures 9 à 11 sont des vues en coupes partielles du contenant et du dispositif de couverture selon l'invention, le rouleau de bâche étant présenté dans plusieurs positions différentes de son déploiement.

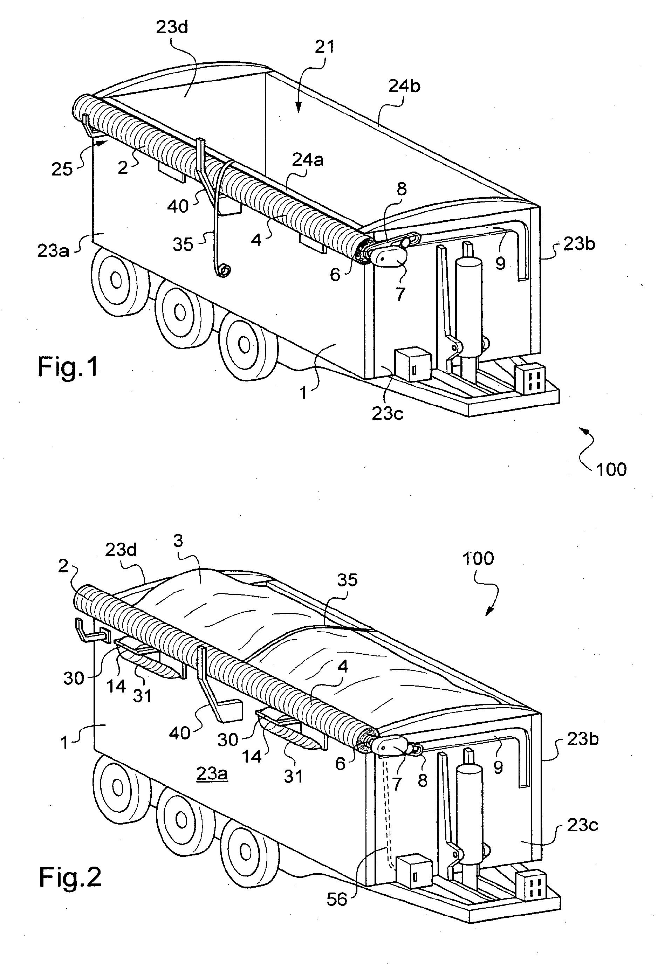

Les figures 1 à 4 illustrent un dispositif de couverture 10 par d'une bâche 2, appelé par la suite dispositif de déroulement 25 de bâche 2, pour fermer l'ouverture supérieure 21 d'un contenant, ici, une carrosserie 1 ou benne d'un véhicule industriel 100.

La figure 1 illustre en particulier l'invention dans une position dans laquelle la bâche 2 est enroulée et le contenant 1 entièrement ouvert attend d'être chargé.

La figure 2 illustre l'invention dans une position dans laquelle le contenant 1 est chargé, la bâche 2 étant toujours enroulée, prête à être déroulée.

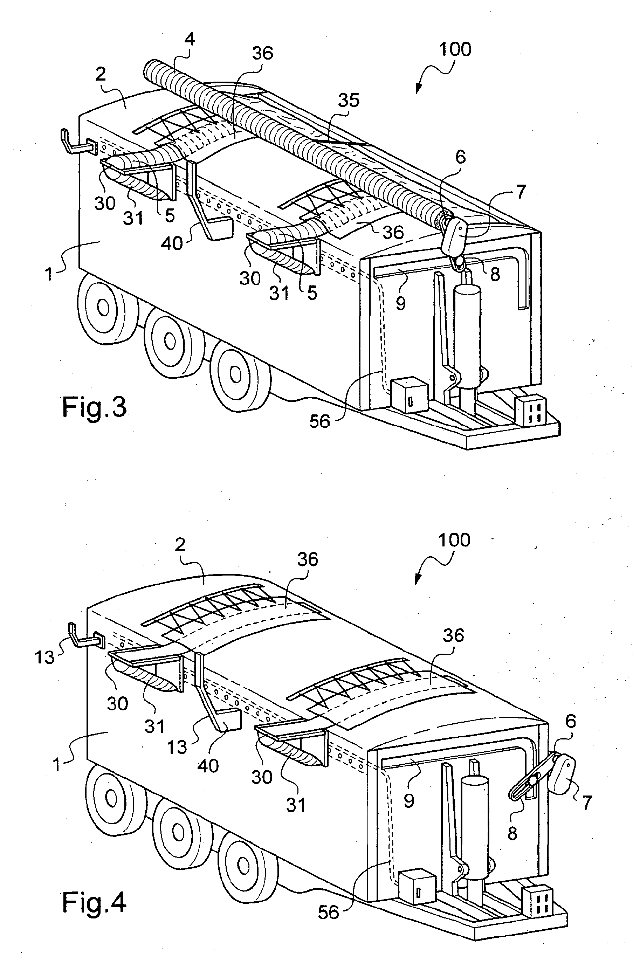

La figure 3 illustre l'invention dans une position dans laquelle la bâche 2 est en cours de déploiement.

La figure 4 illustre l'invention dans une position dans laquelle la bâche 2 est entièrement déroulée sur le contenant 1, sans que dispositif soit plié ;

La carrosserie 1 (ou contenant) comporte quatre rives latérales 23a, 23b, 23c et 23d, et un fond délimitant un volume intérieur destiné à recevoir un contenu. La carrosserie 1 comporte une ouverture supérieure 21 délimitée par les rives 23a, 23b, 23c et 23d. Les parties hautes des quatre rives, respectivement notées 24A, 24b, 24c et 24d, définissent conjointement une bordure supérieure rectangulaire qui délimite l'ouverture supérieure de la carrosserie.

Un bord ou côté latéral 26 de la bâche 2 est fixé sur une première rive 23a ou paroi latérale de la carrosserie 1, qui est disposée parallèlement à l'axe du véhicule. En partant de cette première rive 23a, la bâche 2 se déroule pour couvrir l'ouverture supérieure 21 de la carrosserie 1.

Le dispositif de déroulement 25 de bâche suivant l'invention est dans le cas de la carrosserie 1, particulièrement avantageux quand le contenu dépasse les parties hautes 24A, 24b, 24c et 24d des parois latérales 23A, 23b, 23c et 23d du contenant 1 vers le haut de manière significative, en formant un dôme 3, visible en figure 2. Ce dôme 3 peut comporter des pentes allant jusqu'à 45°, voir plus, sur une hauteur égale à au moins la moitié de la largeur de la carrosserie 1.

La forme du dôme 3 illustré en figure 2 représenté un cas particulier. Le dôme 3 peut comprendre une forme quelconque, comportant une largeur, une longueur, une hauteur ou un nombre de sommets varié. L'intérêt du dispositif selon l'invention est de s'adapter à des formes de dômes 3 quelconques.

On notera que l'invention fonctionne aussi quand il n'y a pas de dôme 3.

Le côté libre de la bâche 2, opposé au côté fixé sur la première rive 23a de la carrosserie 1, est en partie enroulé sur une barre d'enroulement 6 pour former un rouleau de bâche 4 qui se déplace latéralement dans un sens ou dans l'autre en se déroulant ou en s'enroulant, entre une première position dans laquelle la bâche 2 est entièrement enroulée (figure 1), et une deuxième position dans laquelle la bâche est entièrement déroulée (figure 4).

La bâche 2 s'enroule autour d'une barre d'enroulement longitudinale 6, dont une extrémité est portée par la partie haute d'un bras oscillant 8.

Le bras oscillant 8 comporte vers le bas et sur une partie de sa longueur, une fente recevant un axe de maintien qui coulisse dans un rail transversal 9, disposé horizontalement en haut d'une des rives avant 23d ou arrière 23c de la carrosserie 1.

De cette manière, la barre d'enroulement 6 et le bras oscillant 8 peuvent se déplacer d'un côté à l'autre de la carrosserie 1, l'axe de maintien coulissant dans le rail 9. La barre d'enroulement 6 peut aussi en même temps monter et descendre dans une certaine mesure, le bras oscillant 8 coulissant en hauteur grâce à sa fente recevant l'axe de maintien.

Le dispositif de déroulement de bâche 25 comporte de plus une motorisation 7 de la barre d'enroulement 6, qui est reliée à un pivot de cette barre fixé en haut du bras oscillant 8. Cette motorisation 7 comporte un moteur pouvant être pneumatique, électrique ou hydraulique.

La motorisation 7 a plusieurs fonctions. D'une part, elle réalise un enroulement de la bâche 2 sur la barre d'enroulement 6, en entraînant cette barre dans un sens. D'autre part, la motorisation 7 tourne dans l'autre sens pour, en collaboration avec des chambres tubulaires transversales étanches 5, participer au déroulement de la bâche 2 suivant les passages, en freinant la rotation de la barre d'enroulement 6 pour limiter sa vitesse si nécessaire, ou au contraire en augmentant la vitesse de rotation de cette barre 6.

Avantageusement les fils ou canalisations d'alimentation de la motorisation 7 sont intégrés dans la bâche 2, de manière à suivre le mouvement de celle-ci pour ne pas pendre en dehors, et risquer de se faire accrocher. La motorisation 7 est alors alimentée par un joint tournant, pour le passage de courants électriques ou de fluides. Les fils alimentant la motorisation 7 peuvent être portés par une guirlande ou chemin de câble disposés à l'extérieur de la bâche, par exemple contre la rive avant 23c.

Des chambres tubulaires 5 ou chambres de déploiement 5 sont disposées transversalement sur la bâche 2, c'est-à-dire perpendiculairement à la barre d'enroulement 6, dans le sens de déploiement de la bâche. Elles, s'étendent sensiblement sur toute la largeur de la bâche 2, et sont enroulées avec la bâche 2. On dispose plusieurs chambres transversales 5 régulièrement réparties suivant l'axe longitudinal du véhicule 1, les bâches étant fixées sur la bâche 2 au moins par leurs extrémités.

Entre la position enroulée et la position déroulée de la bâche 2, il peut se trouver un dôme 3 formé notamment par les matériaux transportés.

Le déplacement du rouleau de bâche 4 entre la position enroulée et la position déroulée, et donc la mise en place de la bâche 2 sur le dôme 3 par déroulement, est obtenu par le gonflement avec un fluide, ici de l'air, des chambres tubulaires transversales 5 alimentées par un conduit longitudinal 56. Les chambres de déploiement 5 sous la pression de l'air se gonflent, durcissent et génèrent une force capable de faire monter le rouleau de bâche 4 en le déroulant.

Selon un mode de réalisation particulier, les chambres de déploiement 5 sont de section circulaire. Elles sont réalisées en matière plastique souple, de sorte à pouvoir supporter une pression sensiblement égale à 1 bar. La souplesse de la matière permet en outre aux chambres de déploiement 5 d'appuyer sur le rouleau de bâche 4 en l'enveloppant partiellement. Ainsi, le rouleau 4 est soutenu par l'extrémité de la chambre de déploiement 5 lors du déploiement et en particulier lors de la montée sur le dôme 3.

Les chambres de déploiement ont une section importante, d'un diamètre de 20cm environ, ce qui permet de déployer une bâche 2 avec une pression faible, ici comprise entre 0,5 et 1 bar. Le dispositif peut ainsi être alimenté par une source de pression disposée sur le véhicule et sans qu'il soit nécessaire de recourir à un compresseur extérieur.

Lorsque chaque chambre tubulaire 5 se gonfle, et commence à se dresser vers le haut en entraînant dans sa course le rouleau de bâche 4, elle prend appui sur une ceinture arrière disposée autour de la chambre de déploiement 5, sensiblement à la hauteur du point d'attache de la bâche 2 sur la rive 23a de la carrosserie 1.

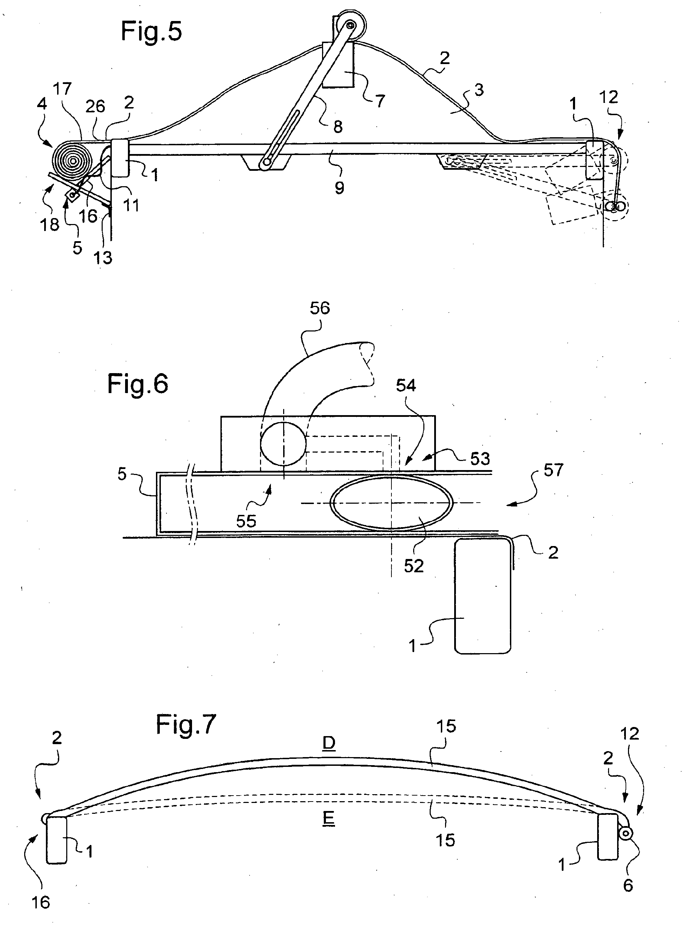

Selon un mode de réalisation particulier illustré par la figure 5, dans la position enroulée, le rouleau de bâche 4 est posé à l'extérieur de la première rive 23a de la carrosserie 1 sur un support 13 incliné, formé de plaques fixées longitudinalement de manière pivotante sur le côté extérieur de cette première rive 23a. Le rouleau de bâche 4 est posé sur le support pivotant 13 qui est déplié vers l'extérieur, de manière à venir un peu en dessous de la partie haute de la première rive 23a, pour être protégé par cette première rive 23a lors des chargements du contenant.

Le support 13 est attelé à des moyens de rappel (non représentés) permettant de plaquer le support 13 sur la première rive 23a lorsque le rouleau de bâche 4 n'est plus posé sur le support 13. Les moyens de rappel sont alors agencés de sorte que le support 13 n'est rabattu contre la première rive 23a que lorsque les chambres de déploiement 5 ne sont plus alimentées par le fluide sous pression, c'est-à-dire une fois la bâche 2 entièrement déployée.

Les moyens de rappel sont également agencés pour écarter le support de la première rive 23a lorsque la bâche 2 est enroulée, de sorte que le support 13 puisse accueillir le rouleau de bâche 4 à la fin de l'enroulage.

Selon une variante de réalisation du support 13, les moyens de rappel sont associés à une portion d'une chambre de déploiement 5 agencée pour permettre au support 13 de s'écarter de la première rive 23a lorsque la chambre de déploiement 5 est sous pression et de se rabattre lorsque la chambre de déploiement 5 n'est plus sous pression.

Le support 13 est ainsi escamoté pour réduire l'encombrement du dispositif et du contenant.

Les ceintures arrière fixées sur la rive 23a par l'intermédiaire du support 13 forcent les chambres tubulaires 5 à partir vers l'intérieur du contenant, en formant un point d'appui les empêchant de reculer, pour pouvoir délivrer une force permettant de franchir le dôme 3.

Le départ des chambres tubulaires 5 est fixé sur le support 13. Quand les chambres tubulaires 5 sont gonflées pour commencer le déroulement du rouleau de bâche 4, les chambres de déploiement 5 prennent appui sur le support 13 et sur la ceinture arrière, pour chercher à s'étendre vers le haut et provoquer une montée du rouleau de bâche 4 permettant de passer au-dessus de la partie haute 24a de la première rive 23a. Pendant cette opération, la motorisation 7 peut délivrer un couple aidant au déroulement du rouleau de bâche 4.

Pour faciliter la montée du rouleau de bâche 4, ce dernier repose également sur un écarteur 16 monté pivotant sur la première rive 23a qui permet d'écarter le rouleau de bâche de la rive. Le réglage de la position de l'écarteur par rapport la première rive 23a permet de régler la position du rouleau de bâche par rapport à l'ouverture. Ainsi, l'effort des chambres de déploiement 5 pour permettre au rouleau de bâche 4 de passer au dessus de la partie haute 24a est minimal.

Dans la descente du dôme 3, la motorisation 7 freine le déroulement si nécessaire, pour donner un mouvement rapide et sans précipitation.

Une fois l'ouverture 21 recouverte, la bâche 2 continue son déroulement et s'étend le long d'une deuxième rive 23b, correspondant à la rive opposée à la première rive 23a.

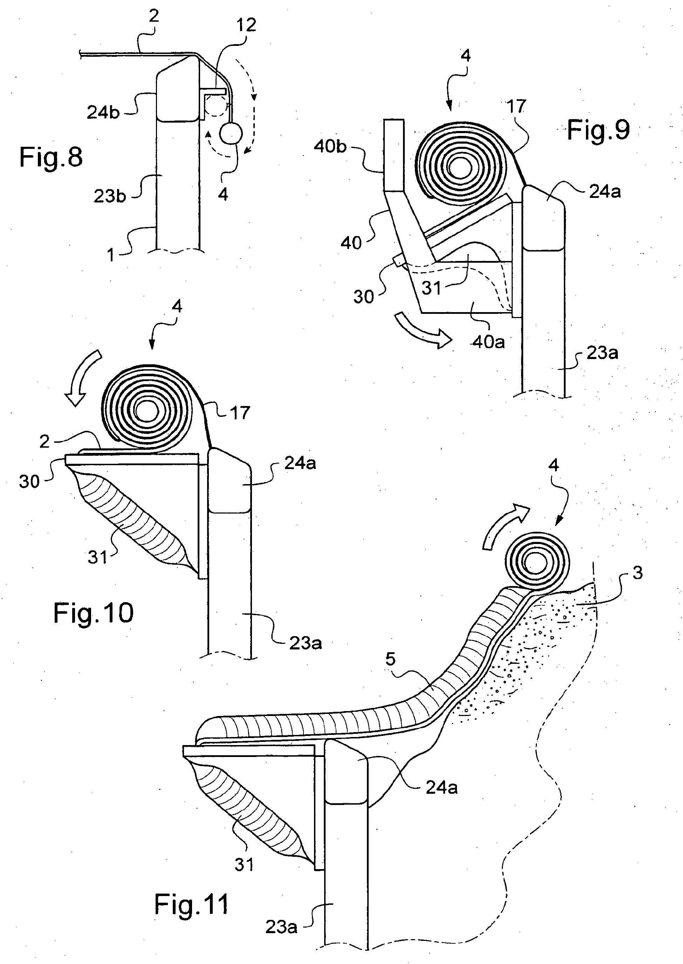

Lorsque la bâche est entièrement déroulée, la motorisation 7 continue à entraîner en rotation la barre d'enroulement 6 sans s'arrêter, et réalise à ce moment un petit enroulement de cette bâche 2 dans l'autre sens. La barre d'enroulement 6 remonte alors en une position de blocage, comme illustré à la figure 8.

Le rouleau de bâche 4 est tourné vers l'intérieur de la carrosserie 1 par rapport à cette bâche 2, et vient se bloquer sous des équerres formant des appuis de blocage 12, situées en haut de la carrosserie 1, ou plus précisément, situé sur la partie haute 24b de la deuxième rive 23b, à proximité de l'ouverture 21. La bâche 2 est tendue sur le contenant 1 par une tension appliquée par la motorisation 7 ce qui permet au véhicule de se déplacer à des grandes vitesses sans crainte de voir la bâche 2 se déplacer.

Avantageusement, la motorisation 7, comportant un moteur électrique, comprend en outre un capteur de courant. Quand le rouleau de bâche 4 vient se bloquer sous les appuis de blocage 12, la motorisation est freinée et le couple délivré augmente, l'intensité du courant d'alimentation monte, et délivre au capteur de courant un signal pour couper cette alimentation.

Le capteur de courant est également agencé pour couper le courant d'alimentation de la motorisation 7 lorsque la bâche 2 est bloquée lors de son déploiement et lorsque la bâche 2 est entièrement enroulée.

De plus en utilisant une motorisation 7 comprenant un réducteur irréversible, une fois l'alimentation de cette motorisation coupée, la tension de la bâche 2 est maintenue par l'irréversibilité du mouvement.

La tension de la bâche 2 par la motorisation 7, permet aussi de tirer transversalement sur la fixation de cette bâche liée au support pivotant 13, et de faire remonter ce support 13 pour le plaquer sur la première rive 23a. De cette manière, le support 13 ne prend plus de place, et l'encombrement latéral du véhicule 100 respecte le gabarit de la carrosserie de ce véhicule 100.

Pour un déblocage de la bâche 2 à partir de la position de blocage, la motorisation 7 est utilisée pour d'abord dérouler la bâche 2 dans le sens opposé de l'enroulement, et ainsi dégager la barre d'enroulement 6 des appuis de blocage 12. Ensuite le mouvement n'est pas arrêté, et la bâche 2 vient s'enrouler dans l'autre sens sur la barre d'enroulement 6.

Le rouleau de bâche 4 étant enroulé dans l'autre sens, vers l'extérieur par rapport à la bâche 2, il passe alors sans problème devant les appuis de blocage 12 sans être accroché par ces derniers.

En référence maintenant aux figure 5, 9 et 10, une bâche complémentaire 17 forme une bande longitudinale fixée de manière continue sur sa longueur, d'un côté sur la partie haute de la première rive 23a de la carrosserie 1 qui reçoit le rouleau de bâche 4 enroulé, et de l'autre côté sur le dessous de la bâche 2 en un point 18 qui est près de cette première rive 23a.

Quand le rouleau de bâche 4 arrive en position complètement enroulée, la bâche complémentaire 17 se tend entre la première rive 23a et le rouleau de bâche 4 en s'inclinant légèrement vers l'extérieur, pour former un plan incliné qui protège le rouleau de bâche 4.

La bâche complémentaire 17 est particulièrement solide, pour résister à des coups et des chutes de matière. De cette manière lors du chargement du contenant 1, les matières qui peuvent tomber sont rejetées sur les côtés et ne peuvent se glisser entre la première rive 23a et le rouleau de bâche 4. Ainsi, la bâche 4 n'est pas abîmée, et reste propre. Des économies d'entretien et de réparation du dispositif d'enroulement sont ainsi effectuées.

Le rouleau de bâche 4 arrivant en position complètement enroulée, le couple fourni par la motorisation 7 vient légèrement forcer sur la barre d'enroulement 6 ce qui cale ce rouleau 4 en appui sur le support pivotant 13 qui tend à s'abaisser. Comme pour la fin du déroulement, le freinage de la motorisation 7 est détecté par le capteur de courant qui coupe alors l'alimentation. La position est aussi maintenue par l'irréversibilité du réducteur de la motorisation 7.

En variante, un effort sur le support pivotant 13 pourrait déclencher un contact lié à la position du support 13, et signaler la fin de l'enroulement pour couper l'alimentation de la motorisation 7.

La figure 6 présente une coupe axiale d'une chambre tubulaire transversale 5 comportant du côté de la paroi latérale de la carrosserie 1, une extrémité ouverte 57 ou entrée de fluide 57, ainsi qu'une petite chambre à air interne d'obstruction 52 de forme ronde, insérée dans cette chambre transversale près de l'extrémité ouverte.

Une alimentation générale comprend un tube longitudinal 56 relié par un tube 11 à une source d'air comprimé. Le tube longitudinal 56 alimente chaque chambre tubulaire transversale 5, par une valve 53 comportant une alimentation principale 55 de cette chambre transversale 5. Une fermeture de la chambre 5, ici une chambre d'obstruction 52 se trouve près de l'extrémité ouverte 57, entre cette extrémité et l'alimentation principale 55.

L'alimentation générale 56 commandée par l'opérateur, alimente simultanément les chambres tubulaires transversales 5 par l'alimentation principale 55, et leurs chambres d'obstruction 52 par une alimentation auxiliaire 54 des valves 53. Au démarrage la chambre d'obstruction 52 comportant un petit volume, se gonfle en premier avant que la chambre tubulaire transversale 5 se mette en pression.

Ce gonflement préliminaire de la chambre d'obstruction 52, obstrue complètement l'extrémité ouverte 57 de la chambre tubulaire transversale 5, ce qui permet ensuite à cette chambre transversale 5 de monter en pression. La montée en pression de la chambre tubulaire transversale 5 continue tant qu'une pression est maintenue dans l'alimentation générale 56, pour maintenir gonflée la chambre d'obstruction 52.

L'extrémité ouverte 57 de la chambre tubulaire transversale 5 étant fixée sur le support 13, près de la première rive 23a de la carrosserie 1, cette chambre 5 prend appui sur cette première rive 23a pour pousser le rouleau de bâche 4 sur le dôme 3, afin de le dérouler sur la pente de ce dôme 3.

Lors de l'enroulement de la bâche vers sa position de stockage, les chambres de déploiement 5 doivent être purgées de l'air qu'elles contiennent. En effet, l'air restant dans les chambres de déploiement 5, appelé également volume mort, peut s'opposer à l'enroulage de la bâche en gonflant lesdites chambres de déploiement 5.

Les chambres de déploiement 5 comportent ainsi des moyens d'évacuation du fluide contenu dans les chambres de déploiement 5 lors de l'enroulement de la bâche 2.

La chambre d'obstruction 52 peut être remplacée avantageusement par une purge rapide permettant de fermer l'entrée de fluide lors du dégonflage des chambres de déploiement 5 et permettant leur dégonflage lors de l'enroulement de la bâche 2.

Pendant le déroulement du rouleau de bâche 4, la motorisation 7 constitue un moyen de contrôle de la vitesse de rotation de barre d'enroulement 6, par exemple en freinant un débit d'air ou de liquide, ou en alimentant un moteur électrique, pour limiter si nécessaire la vitesse de déroulement en évitant une vitesse trop élevée pouvant générer des chocs et des risques d'endommagement du dispositif.

La motorisation 7 peut si nécessaire aussi servir à aider au moins ponctuellement le déroulement, notamment au début du déroulement quand le rouleau de bâche 4 est gros et lourd.

La motorisation 7 agit en combinaison avec la pression d'air dans les chambres tubulaires transversales 5, pour assurer un fonctionnement sûr et efficace dans tous les cas de déroulement du rouleau de bâche 4.

En position de blocage du rouleau de bâche 4, sous les appuis de blocage 12, le capteur de courant arrête toute la motorisation 7 et commande aussi automatiquement la coupure d'alimentation générale en air 56. La pression diminue dans les chambres d'obstruction 52 et l'extrémité ouverte 57 des chambres tubulaires transversales 5 devient libre, ces chambres transversales 5 se dégonflent.

Le véhicule 100 est prêt pour un transport de marchandises.

Le véhicule 100 est aussi prêt pour une ouverture par enroulage de cette bâche 2. L'alimentation générale 56 n'étant pas alimentée, les chambres d'obstruction 52 sont dégonflées, et permettent d'enrouler rapidement par la motorisation 7 reliée au bras oscillant 8 guidé par le rail 9, la bâche 2 en évacuant facilement l'air des chambres tubulaires transversales 5 par leur ouverture d'extrémité 57 de section importante, sans générer de frein à l'enroulement.

En complément dans le cas d'une carrosserie de véhicule industriel, les chambres transversales 5 peuvent être recouvertes d'une toile extensible 36 représentée sur les figures 3 et 4, fixée sur la bâche 2, afin d'éviter que ces chambres de déploiement 5 ne battent au vent.

En variante on peut utiliser un moyen de contrôle de la vitesse de rotation du rouleau de bâche 4 ne comprenant pas de motorisation 7, mais par exemple seulement un frein. Dans ce cas, l'enroulement de la bâche 2 peut se faire de manière manuelle.

Suivant une autre variante illustrée en figure 7, les chambres tubulaires transversales 5 ont une section variable, qui se réduit progressivement en allant vers le côté mobile de la bâche 2, pour délivrer une force de déroulement se réduisant suivant l'avancement du rouleau de bâche 4 qui devient de plus en plus léger en se déroulant.

Avantageusement sur un véhicule industriel, les chambres transversales 5 ainsi qu'une motorisation pneumatique 7, sont alimentées en air comprimé par le circuit pneumatique secondaire du véhicule.

La figure 7 présente sur le véhicule industriel 100, des arceaux pneumatiques 15 reliant une rive à l'autre, disposés transversalement sous la bâche 2, et répartis longitudinalement de manière régulière. Ces arceaux pneumatiques 15 sont réalisés de manière à ce qu'une fois gonflés par une commande indépendante, ils forment des traverses relativement rigides, incurvées vers le haut.

L'alimentation en air des arceaux pneumatiques 15 s'effectue de la même manière que celle des chambres transversales 5, avec un dispositif de valve comprenant des petites chambres d'obstruction. En l'absence d'air ces petites chambres d'obstruction se dégonflent, et les cavités des arceaux pneumatiques 15 sont mises à l'échappement libre.

Les arceaux pneumatiques 15 constituent un soutien de la bâche 2 fermée qui forme transversalement un léger dôme pendant le roulage, ce dôme tend la bâche en évitant des claquements, et empêche la formation d'un creux retenant de l'eau lors des pluies.

On peut notamment en adaptant la pression des arceaux pneumatiques 15, former un dessus de bâche 2 plat E en roulant pour réduire la traînée du véhicule, et former un dôme D à l'arrêt pour éviter la rétention d'eau.

Lors de l'enroulement de la bâche 2, les arceaux pneumatiques 15 sont dégonflés, et ils s'enroulent dans le rouleau de bâche 4 sans gêner, comme les chambres tubulaires transversales 5.

Le dispositif de déroulement d'une bâche 2 peut s'utiliser de la même manière sur des applications fixes comprenant par exemple des surfaces accidentées qui doivent être protégées, par exemple des tas de céréales dans les dépôts agricoles.

Selon le mode de réalisation de l'invention illustré dans les figures 1 à 4, la couverture d'un contenant 1 comporte ainsi les étapes de :
- actionner les moyens de levage pour amener le rouleau de bâché 4 sensiblement au dessus de la partie haute 24a de la première rive 23a ;
- alimenter en air sous pression les chambres de déploiement 5 afin de déployer la bâche 2 et alimenter la motorisation 7 afin de contrôler la vitesse de rotation de la barre d'enroulement 6 ;
- stopper l'alimentation en air sous pression des chambres de déploiement 5 et des moyens de levage, ce qui entraîne le repliement des moyens de levage et l'escamotage du support 13 ;
- une fois la bâche déployée, maintenir l'alimentation de la motorisation 7 afin de bloquer la barre d'enroulement 6 sous les équerres 12, la motorisation 7 cessant d'être alimentée, grâce au capteur de courant, lorsque la barre d'enroulement 6 est bloquée.

L'enroulement de la bâche 2 à partir de la position déployée comporte alors les étapes de :
- alimenter les moyens de levage afin de déplier le support 13 ;
- alimenter la motorisation 7 afin d'enrouler la bâche 2 ;
- une fois le rouleau de toile 4 en appui sur le support 13, stopper l'alimentation en air sous pression des moyens de levage afin d'amener le rouleau de bâche 4 en position de stockage.

Bien entendu, l'invention n'est pas limitée au mode de réalisation décrit, mais englobe toute variante entrant dans le champ de l'invention telle que définie par les revendications.

Ainsi, le poids de la bâche 2 peut être si important que le gonflage des chambres de déploiement 5 (ou chambres transversales) ne suffit pas à soulever le rouleau de bâche 4 lorsqu'il est posé sur le support. Il est donc nécessaire de recourir à des moyens de levage pour soulever la bâche 2 et l'amener dans une position facilitant son déploiement, c'est-à-dire une position dans laquelle le rouleau de bâche 4 est disposé sensiblement à la même hauteur que la partie haute 24a à 24d des rives 23a à 23b.

Les figures 9, 10 et 11 illustrent un mode de réalisation d'un tel moyen de levage.

En référence maintenant à la figure 9, les moyens de levage comportent une chaise comprenant une plateforme 30 articulée sur la première rive 23a entre une première position dans laquelle la plateforme 30 est parallèle à la première rive 23a et une deuxième position dans laquelle la plateforme 30 est horizontale, c'est-à-dire sensiblement perpendiculaire à la première rive 23a. Les moyens de levages comportent également une chambre de levage 31 gonflable, similaire à une chambre de déploiement 5, qui sous l'effet d'air sous pression, soulève la plateforme 30 pour déplacer le rouleau de bâche 4 à effleurement avec l'ouverture 21 du contenant 1.

Ainsi, en position enroulée, le rouleau de bâche 4 repose sur une fourche 40 et contre la plateforme 30 de la chaise plaquée sur la première rive 23a. La fourche 40 comporte un socle 40a sensiblement horizontal permettant de soutenir le rouleau de bâche 4 et un montant 40b sensiblement vertical et dépassant de la partie haute 24a de la première rive 23. Le montant 40b permet de maintenir le rouleau de bâche sur le la fourche 40, notamment lors des déplacements du rouleau 4 par les moyens de levage.

Pour déplacer le rouleau de bâche 4, les chambres de levage 31 sont gonflées pour soulever la plateforme 30 dans une position horizontale permettant à la bâche 2 de se déployer simplement. Comme on le constate sur la figure 10, lorsque la plateforme est dans sa deuxième position, le rouleau de bâche 4 est sensiblement à la même hauteur que l'ouverture 21.

Le gonflement des chambres de déploiement 5 permet alors le déploiement de la bâche 2 comme illustré en figure 11.

Les moyens de levage peuvent se substituer à ou compléter avantageusement l'écarteur 16 qui n'est plus alors nécessaire. Le support 13 peut être également adapté pour guider le rouleau de bâche 4 lors du levage afin qu'il ne tombe pas de la plateforme 30. De plus, la ceinture arrière n'est plus nécessaire puisque la plateforme 30 place le rouleau de bâche 4 dans une position dans laquelle il n'est plus nécessaire d'avoir un appui pour se soulever au-dessus de la partie haute 24a de la première rive 23a.

Lorsque la bâche 2 atteint une grande longueur, il peut être nécessaire de la soutenir sur le contenant 1 par un appui intermédiaire. Il est ainsi possible d'utiliser une sangle 35 tendue entre la première rive 23a et la deuxième rive 23b du contenant 1, c'est-à-dire dans le sens du déploiement de la bâche, comme soutien. L'utilisation d'une telle sangle est illustrée par les figures 1 à 3.

## Revendications

1. Dispositif pour couvrir un contenant (1), notamment une benne, comprenant une ouverture (21) délimitée par quatre rives latérales(23a, 23b ,23c, 23d), le dispositif comprenant une bâche (2) dont un bord fixe est fixé sur une première rive (23a) du contenant (1) et dont un bord libre, parallèle au bord fixe, est lié à une barre d'enroulement (6) sur laquelle est enroulée la bâche (2) de sorte à former un rouleau de bâche (4), le dispositif comprenant en outre au moins une chambre de déploiement (5) gonflable disposée au contact de la bâche (2) pour être enroulée autour de la barre d'enroulement (6) avec la bâche (2), la chambre de déploiement (5) étant orientée perpendiculairement à la barre d'enroulement (6) pour, lors du gonflage, dérouler la bâche (2)entre une position enroulée dans laquelle le contenant (1) est ouvert et une position déroulée dans laquelle le contenant est fermé par la bâche (2) qui s'étend alors de la première rive (23a) à une deuxième rive (23b) opposée à la première rive (23a), le dispositif comportant des moyens de contrôle de la vitesse de rotation (7) de la barre d'enroulement (6), **caractérisé en ce que** les moyens de contrôle comportent un moteur (7) d'entraînement en rotation de la barre d'enroulement (6), le moteur et la barre d'enroulement étant portés par un bras oscillant (8) articulé sur un axe de maintien monté coulissant dans un rail de guidage (9) porté par le contenant (1), l'axe de maintien permettant un coulissement transversal du bras (8) lors du déploiement de la bâche (2).

2. Dispositif selon la revendication 1, dans lequel le bras oscillant (8) comporte vers le bas une fente s'étendant sur une partie de sa longueur et dans laquelle l'axe de maintien est reçu.

3. Dispositif selon l'une des revendications 1 ou 2, dans lequel le moteur (7) est un moteur électrique, et dans lequel les moyens de contrôle comportent un capteur de courant qui déclenche un arrêt du moteur (7) à partir d'un certain seuil d'intensité du courant correspondant pour la bâche à la position déroulée.

4. Dispositif selon l'une des revendications précédentes, dans lequel le moteur (7) est agencé pour enrouler la bâche (2) depuis la position déroulée jusqu'à la position enroulée.

5. Dispositif selon l'une des revendications 1 à 4, dans lequel chaque chambre de déploiement (5) comporte une alimentation générale délivrant un fluide sous pression alimentant une entrée de fluide comprenant des moyens de fermeture sélectifs (52) de l'entrée de fluide, chaque chambre comportant en outre des moyens d'évacuation du fluide (52) contenu dans les chambres de déploiement (5) lors de l'enroulement de la bâche (2), tels une purge rapide.

6. Dispositif selon l'une des revendications 1 à 5, **caractérisé en ce que** les chambres de déploiement (5) comportent une section variable diminuant dans le sens de déploiement de la bâche (2).

7. Ensemble comprenant un dispositif selon l'une quelconque des revendications 1 à 6, et un contenant (1) ouvert comprenant au moins un support (13) de la bâche enroulée, disposé sur la première rive (23a) du contenant, chaque support (13) étant agencé pour maintenir la bâche (2) enroulée dans une position de stockage de sorte quelle laisse libre l'ouverture (21).

8. Ensemble selon la revendication 7 dans lequel chaque support (13) est escamotable.

9. Ensemble selon l'une des revendications 7 ou 8, comprenant des moyens de levage pour déplacer la bâche (2) enroulée de la position de stockage dans une position de déploiement facilitant son déroulement.

10. Ensemble selon la revendication 9,dans laquelle les moyens de levage comprennent au moins une plateforme (30), recevant la bâche enroulée (4), articulée sur la première rive (23a) et soulevée par au moins une chambre de levage (31) disposée entre la plateforme (30) et la première rive (23a) du contenant (1).

11. Ensemble selon l'une des revendications 7 à 10, comportant au moins deux appuis de blocage (12) fixés sur une deuxième rive (23b), opposée à la première rive (23a) du contenant (1), les appuis de blocages (12) recevant la barre d'enroulement (6) pour bloquer la bâche (2) en position déroulée

12. Ensemble selon l'une des revendications 7 à 11, comprenant au moins une sangle disposée (35) entre la première (23a) et la deuxième rive (23b) du contenant (1) et agencée pour guider le déploiement de la bâche (2).

13. Ensemble selon l'une des revendications 7 à 12 comprenant une bâche complémentaire (17) attachée par un premier bord à une extrémité (24a) de la première rive (23a) et par une deuxième extrémité à la bâche (2), la bâche complémentaire (17) étant agencée pour recouvrir la bâche (2) enroulée lorsqu'elle repose sur les supports (13).

14. Véhicule de transport comprenant un ensemble selon l'une quelconque des revendications 7 à 13.

## Patentansprüche

1. Vorrichtung zum Abdecken eines Behälters (1), insbesondere eines Wagenkastens, der eine von vier Seitenrändern (23a, 23b, 23c, 23d) begrenzte Öffnung (21) hat, umfassend eine Plane (2), von der ein fester Rand an einem ersten Seitenrand (23a) des Behälters (1) befestigt ist und von der ein zu dem festen Rand paralleler freier Rand an einer Aufwickelstange (6) befestigt ist, auf der die Plane (2) aufgewickelt wird, um so eine Planenrolle (4) zu bilden, wobei die Vorrichtung ferner mindestens eine aufblasbare Spreizkammer (5) hat, die in Kontakt mit der Plane (2) angeordnet ist, so dass sie mit der Plane (2) um die Aufwickelstange (6) aufwickelbar ist, wobei die Spreizkammer (5) senkrecht zur Aufwickelstange (6) gerichtet ist, um so beim Aufblasen die Plane (2) zwischen einer aufgewickelten Position, in der der Behälter (1) offen ist, und einer abgewickelten Position abzuwickeln, in der der Behälter durch die Plane (2) verschlossen wird, die sich dann von dem ersten Seitenrand (23a) zu einem dem ersten Seitenrand (23a) gegenüberliegenden zweiten Seitenrand (23b) erstreckt, wobei die Vorrichtung Steuermittel (7) zum Steuern der Drehgeschwindigkeit der Aufwickelstange (6) umfasst, **dadurch gekennzeichnet, dass** die Steuermittel einen Motor (7) zum Drehantrieb der Aufwickelstange (6) haben, wobei der Motor und die Aufwickelstange an einem Schwenkarm (8) gehalten sind, der auf einer Stützachse schwenkbar gelagert ist, die in einer Führungsschiene (9) gleitend verschiebbar gelagert ist, die an dem Behälter (1) vorgesehen ist, und wobei die Stützachse eine Querbewegung des Armes (8) während des Abwickelns der Plane (2) erlaubt.

2. Vorrichtung nach Anspruch 1, bei der der Schwenkarm (8) einen sich nach unten über einen Teil der Länge erstreckenden Schlitz hat, in den die Stützachse eingreift.

3. Vorrichtung nach einem der Ansprüche 1 oder 2, bei welcher der Motor (7) ein Elektromotor ist und bei welcher die Steuermittel einen Stromfühler haben, der bei Erreichen eines bestimmten Schwellwertes der Stromstärke, welcher der abgewickelten Position der Plane entspricht, ein Anhalten des Motors (7) veranlasst.

4. Vorrichtung nach einem der vorhergehenden Ansprüche, bei welcher der Motor (7) dafür ausgebildet ist, die Plane (2) aus ihrer abgewickelten Position in ihre aufgewickelte Position aufzuwickeln.

5. Vorrichtung nach einem der Ansprüche 1 bis 4, bei welcher die Spreizkammer (5) eine allgemeine Zuführeinrichtung umfasst, die ein Druckfluid an einen Fluideinlass liefert, der Mittel (52) zum wahlweisen Verschließen des Fluideinlasses aufweist, wobei jede Kammer ferner Evakuierungsmittel (52) hat, um das in den Spreizkammern (5) enthaltene Fluid während des Aufwickelns der Plane (2) zu evakuieren, wie beispielsweise einen Schnellauslass.

6. Vorrichtung nach einem der Ansprüche 1 bis 5, **dadurch gekennzeichnet, dass** die Spreizkammern (5) einen veränderlichen Querschnitt haben, der in Richtung des Entfaltens der Plane (2) abnimmt.

7. Anordnung mit einer Vorrichtung nach einem der Ansprüche 1 bis 6 und einem offenen Behälter (1), umfassend mindestens einen Träger (13) für die aufgewickelte Plane, der an dem ersten Seitenrand (23a) des Behälters angeordnet ist, wobei jeder Träger (13) so ausgebildet ist, dass er die aufgewickelte Plane (2) in einer Speicherstellung so hält, dass die Öffnung (21) frei bleibt.

8. Anordnung nach Anspruch 7, bei welcher jeder Träger (13) ausrückbar ist.

9. Anordnung nach einem der Ansprüche 7 oder 8, umfassend Hubmittel zum Verlagern der aufgewickelten Plane (2) aus der Speicherstellung in eine Entfaltungsstellung, welche ihr Abwickeln erleichtern.

10. Anordnung nach Anspruch 9, bei welcher die Hubmittel mindestens eine Plattform (30) umfassen, welche die aufgewickelte Plane (4) aufnimmt und an den ersten Seitenrand (23a) angelenkt ist sowie durch eine Hubkammer (31) angehoben wird, die zwischen der Plattform (30) und dem ersten Seitenrand (23a) des Behälters (1) angeordnet ist.

11. Anordnung nach einem der Ansprüche 7 bis 10, umfassend mindestens zwei Blockierungsanschläge (12), die an einem dem ersten Seitenrand (23a) des Behälters (1) gegenüberliegenden zweiten Seitenrand (23b) befestigt sind und welche die Aufwickelstange (6) aufnehmen, um die Plane (2) in ihrer abgewickelten Position festzulegen.

12. Anordnung nach einem der Ansprüche 7 bis 11, umfassend mindestens einen Gurt (35), der zwischen dem ersten Seitenrand (23a) und dem zweiten Seitenrand (23b) des Behälters (1) angeordnet und dazu bestimmt ist, die Plane (2) beim Entfalten zu führen.

13. Anordnung nach einem der Ansprüche 7 bis 12, umfassend eine komplementäre Plane (17), die mit einem ersten Rand an einem Ende (24a) des ersten Seitenrandes (23a) und mit einem zweiten Ende an der Plane (2) befestigt ist, wobei die komplementäre Plane (17) dazu dient, die aufgewickelte Plane (2) abzudecken, wenn diese auf den Trägern (13) ruht.

14. Transportfahrzeug, umfassend eine Anordnung nach einem der Ansprüche 7 bis 13.

## Claims

1. A device for covering a container (1), in particular a bin, comprising an opening (21) delimited by four lateral edges (23a, 23b, 23c, 23d), with the device comprising a tarpaulin (2), one stationary side of which is fixed to a first edge (23a) of the container (1) and a free side of which, which is parallel to the stationary side, is connected to a winding bar (6) whereon the tarpaulin (2) is wound so as to form a tarpaulin roll (4), with the device further comprising at least one inflatable deployment chamber (5) arranged in contact with the tarpaulin (2) in order to be wound around the winding bar (6) with the tarpaulin (2), with the deployment chamber (5) being oriented perpendicularly to the winding bar (6) in order to unwind the tarpaulin (2), during inflation, between a wound-up position wherein the container (1) is open and an unwound position wherein the container is closed by the tarpaulin (2) which then extends from the first edge (23a) to a second edge (23b) opposite the first edge (23a), with the device having means (7) for controlling the speed of rotation of the winding bar (6), **characterized in that** the control means comprise a motor (7) for driving the winding bar (6) in rotation, with the motor and the winding bar being supported by an oscillating arm (8) hinged to a holding shaft mounted to slide in a guide rail (9) supported by the container (1), with the holding shaft enabling the transverse sliding of the arm (8) upon the deployment of the tarpaulin (2).

2. A device according to claim 1, wherein the oscillating arm (8) comprises, downwards, a slot extending on a portion of the length thereof and wherein the holding shaft is received.

3. A device according to one of claims 1 or 2, wherein the motor (7) is an electric motor, and wherein the control means comprises a current sensor which triggers the stopping of the motor (7) above a certain threshold of intensity of the corresponding current for the tarpaulin in the unwound position.

4. A device according to one of the preceding claims, wherein the motor (7) is so arranged as to wind up the tarpaulin (2) from the unwound position to the wound position.

5. A device according to one of claims 1 to 4, wherein each deployment chamber (5) has a general power supply delivering a pressurized fluid supplied to a fluid inlet comprising selective means (52) for closing the fluid inlet, with each chamber also having fluid discharge means (52) contained in the deployment chambers (5) upon winding the tarpaulin (2), such as a quick-action flushing system.

6. A device according to one of claims 1 to 5, **characterized in that** the deployment chambers (5) have a variable section decreasing in the direction of deployment of the tarpaulin (2).

7. An assembly comprising a device according to any one of claims 1 to 6, and an open container (1) comprising at least a support (13) for the wound tarpaulin, positioned on the first edge (23a) of the container, with each support (13) being so arranged as to hold the wound tarpaulin (2) in a storage position so that it leaves the opening (21) clear.

8. An assembly according to claim 7, wherein each support (13) is retractable.

9. An assembly according to one of claims 7 or 8, comprising lifting means for moving the wound tarpaulin (2) from the storage position to a deployment position facilitating the unwinding thereof.

10. An assembly according to claim 9, wherein the lifting means comprises at least one platform (30) receiving the wound tarpaulin (4), hinged on the first edge (23a) and lifted by at least one lifting chamber (31) positioned between the platform (30) and the first edge (23a) of the container (1).

11. An assembly according to one of claims 7 to 10, comprising at least two locking supports (12) fixed on a second edge (23b), opposite the first edge (23a) of the container (1), with the locking supports (12) receiving the winding bar (6) for locking the tarpaulin (2) in the unwound position.

12. An assembly according to one of claims 7 to 11, comprising at least one strap positioned (35) between the first (23a) and the second (23b) edges of the container (1) and so arranged as to guide the deployment of the tarpaulin (2).

13. An assembly according to one of claims 7 to 12, comprising an additional tarpaulin (17) attached on a first side at one end (24a) of the first edge (23a) and at a second end to the tarpaulin (2), with the additional tarpaulin (17) being so arranged as to cover the wound tarpaulin (2) when it rests on the supports (13).

14. A transport vehicle comprising an assembly according to any one of claims 7 to 13.
